# EUROPEAN PATENT APPLICATION

(11) **EP 2 870 995 A1**
(43) Date of publication of application: **13.05.2015**
(21) Application number: 13812593.5
(22) Date of filing: 28.06.2013
(51) Int. Cl.: B01F 1/00, B01D 19/00, B01F 3/04, B01F 5/02, B01F 5/04

(54) **GAS DISSOLVER**

(30) Priority: 05.07.2012 JP 2012151204
(71) Applicant: Panasonic Intellectual Property Management Co., Ltd., Osaka-shi, Osaka 540-6207 (JP)
(72) Inventor: MAEDA, Yasunari, Osaka-shi, Osaka 540-6207 (JP); ITOU, Yoshihiro, Osaka-shi, Osaka 540-6207 (JP); KITAMURA, Hitoshi, Osaka-shi, Osaka 540-6207 (JP); TSUTSUMI, Kyoko, Osaka-shi, Osaka 540-6207 (JP); SHIBATA, Naoki, Osaka-shi, Osaka 540-6207 (JP); AKITA, Tomohiro, Osaka-shi, Osaka 540-6207 (JP)
(74) Representative: Müller-Boré & Partner Patentanwälte PartG mbB
(86) International application number: PCT/JP2013/004052
(87) International publication number: WO 2014/006865

(57) **Abstract**

A gas dissolver includes a gas discharge valve which has a gas inlet at a bottom portion of the gas discharge valve and is provided at a top portion of the gas-liquid separation vessel, a vent port which is formed at the gas inlet and introduces a part of a gas collected in a top portion of the gas-liquid separation vessel into an interior of the gas discharge valve, and a drain port which is formed at the gas inlet and drains off the gas-dissolved liquid entering an interior of the gas discharge valve to the gas-liquid separation vessel. In the gas dissolver, a position at which the vent port is disposed is higher than that at which the drain port is disposed with respect to a height direction of the dissolution tank, and the second partitioning wall, and the outlet are provided such that the gas-dissolved liquid flows along the gas-liquid separation vessel in a horizontal direction.

## Description

### Technical Field

The present invention relates to a gas dissolver which dissolves a gas such as air in a solvent such as water.

### Background Art

In JP 2010-227782 A, the applicant has proposed a gas dissolver which can reduce a size, suppress turbulence in a gas-liquid separation vessel, and suppress an outflow of large bubbles.

The gas dissolver disclosed in JP 2010-227782 A1 includes a dissolution tank of which an interior is partitioned into a gas-liquid mixing vessel, a large-bubble outflow preventing vessel, and a gas-liquid separation vessel which are disposed in turn from an upstream side to a downstream side with respect to a liquid-flow by two partitioning walls consisting of a first partitioning wall and a second partitioning wall. In the gas dissolver, fluid flowing into the dissolution tank is mixed with a gas in the gas-liquid mixing vessel to produce gas-dissolved liquid, and the liquid flows into the large-bubble outflow preventing vessel and the gas-liquid separation vessel in turn.

Additionally, in the gas dissolver, the dissolution tank is provided with a gas discharge valve in a portion corresponding to an upper end of the gas-liquid separation vessel, so that a part of an undissolved gas which is left undissolved and retained in a top portion in the dissolution tank can be extracted to an outside of the dissolution tank. Water and air are supplied to the gas-liquid mixing tank, and the undissolved gas is actively exhausted by the gas discharge valve, so that an air exchange is promoted. By the air exchanging, an oxygen concentration in the dissolution tank can be maintained at a high level, and as a result, a larger amount of oxygen can be dissolved in water. It is possible to produce oxygen-dissolved water having a sufficiently high concentration of dissolved oxygen corresponding to a required effect.

### Summary of Invention

### Problem resolved by Invention

In such the gas dissolver, the liquid may enter the gas discharge valve together with an undissolved gas retained in the top portion of the dissolution tank. In this case, it is necessary to downwardly drain the liquid off the gas discharge valve in order to easily remove the gas. However, when the liquid is drained from a vent port through which the undissolved gas is introduced into the gas discharge valve, the undissolved gas and the liquid may not be smoothly exchanged due to a liquid film formed by a surface tension.

The present invention has been made in view of the circumstances above-mentioned and has an object to provide a gas dissolver which can smoothly exhaust a part of an undissolved gas retained in the top portion of the dissolution tank to an outside of the dissolution tank by the gas discharge valve.

### Means for resolving Problem

In order to resolve the problem above-mentioned, the first aspect of the present invention provides a gas dissolver A gas dissolver comprises a dissolution tank provided with an outlet through which gas-dissolved liquid is capable of flowing, and a first partitioning wall and a second partitioning wall provided in an interior of the dissolution tank. In the gas dissolver, the interior of the dissolution tank is partitioned into a gas-liquid mixing vessel, an intermediate vessel, and a gas-liquid separation vessel in turn from an upstream side to a downstream side with respect to a flow of the gas-dissolved liquid by the first partitioning wall and the second partitioning wall. The gas-dissolved fluid is produced by mixing fluid flowing into the dissolution tank with a gas in the gas-liquid mixing vessel. The gas-dissolved liquid sequentially flows into the intermediate vessel and the gas-liquid separation vessel and flows out from the outlet of the dissolution tank to an outside of the dissolution tank,

The gas dissolver further comprises a gas discharge valve which has a gas inlet at a bottom portion of the gas discharge valve and is provided at a top portion of the gas-liquid separation vessel, a vent port which is formed at the gas inlet and introduces a part of a gas collected in a top portion of the gas-liquid separation vessel into an interior of the gas discharge valve, and a drain port which is formed at the gas inlet and drains off the gas-dissolved liquid entering an interior of the gas discharge valve to the gas-liquid separation vessel.

In the gas dissolver provides, a position at which the vent port is disposed is higher than that at which the drain port is disposed with respect to a height direction of the dissolution tank, and the second partitioning wall and the outlet are provided such that the gas-dissolved liquid flows along the gas-liquid separation vessel in a horizontal direction.

The second aspect of the present invention preferably provides a gas dissolver in which the second partitioning wall and the outlet are provided such that the gas-dissolved liquid flows along an outer surface of the intermediate vessel in a horizontal direction.

The third aspect of the invention preferably provides a gas dissolver in which a top portion of the second partitioning wall is partially cut to form a notch portion, and the outlet is provided at a bottom portion of the gas-liquid separation vessel and is disposed at a position away from the notch portion.

The fourth aspect of the present invention preferably provides a gas dissolver in which the second partitioning wall is provided such that the intermediate vessel surrounds a periphery of gas-liquid mixing vessel from an outside of the gas-liquid vessel partitioned by the first partitioning wall.

The fifth aspect of the present invention preferably provides a gas dissolver in which the first partitioning wall and the second partitioning wall have an elliptical shape.

### Effects of Invention

According to a gas dissolver of the present invention, a part of an undissolved gas retained in a top portion of a dissolution tank can be smoothly exhausted to an outside of the dissolution tank by a gas discharge valve.

### Brief Description of Drawings

Fig. 1 is a front view illustrating an embodiment of a gas dissolver of the present invention.
Fig. 2 is a vertical cross-sectional view of the gas dissolver illustrated in Fig. 1.
Figs. 3(a), 3(b), and 3(c) are cross-sectional views of a dissolution tank in the gas dissolver illustrated in Fig. 2 taken along lines A-A, B-B, and C-C, respectively.
Fig. 4 is a perspective view of the dissolution tank partially broken away of the gas dissolver illustrated in Fig. 2.
Fig. 5 is a schematic view illustrating suppression of moving bubbles by vertical ribs.
Fig. 6 is a partial cross-sectional view illustrating the dissolution tank taken along line D-D of the gas dissolver illustrated in Fig. 2.
Fig. 7 is a perspective view illustrating a peripheral portion of a gas circulation pipe partially broken away of the dissolution tank.
Fig. 8 is an exploded perspective view of the dissolution tank of the gas dissolver illustrated in Fig. 1.
Fig. 9 is an exploded perspective view of the dissolution tank of the gas dissolver illustrated in Fig. 1.

### Description of Embodiments

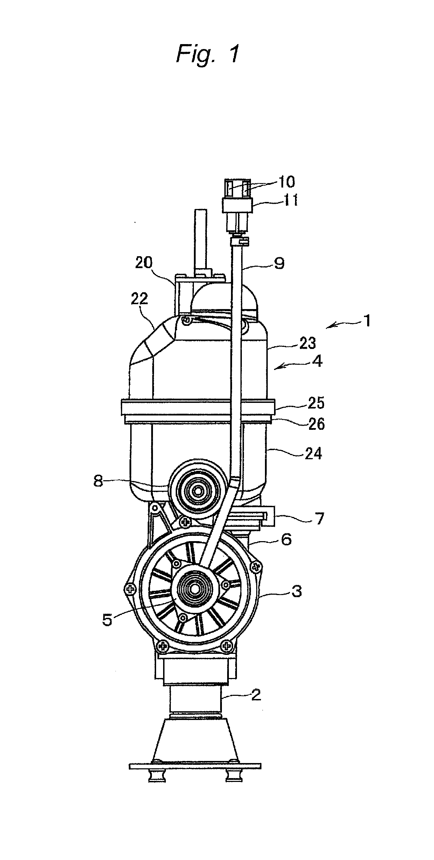

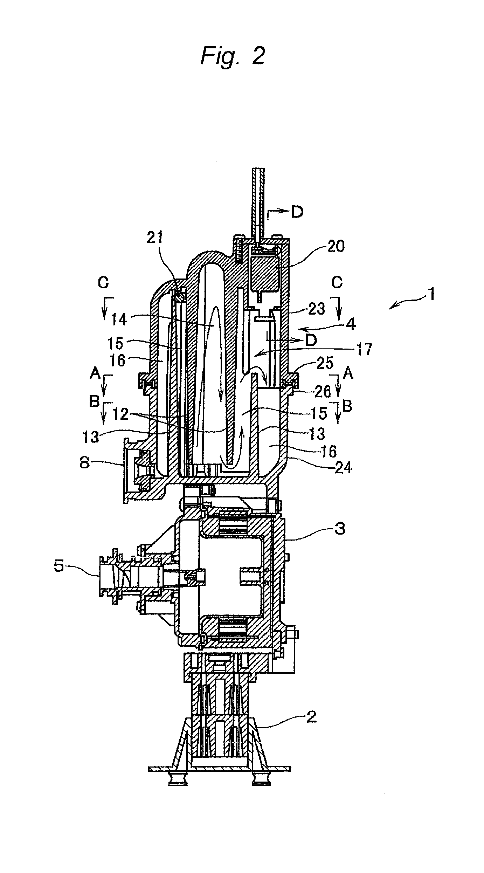

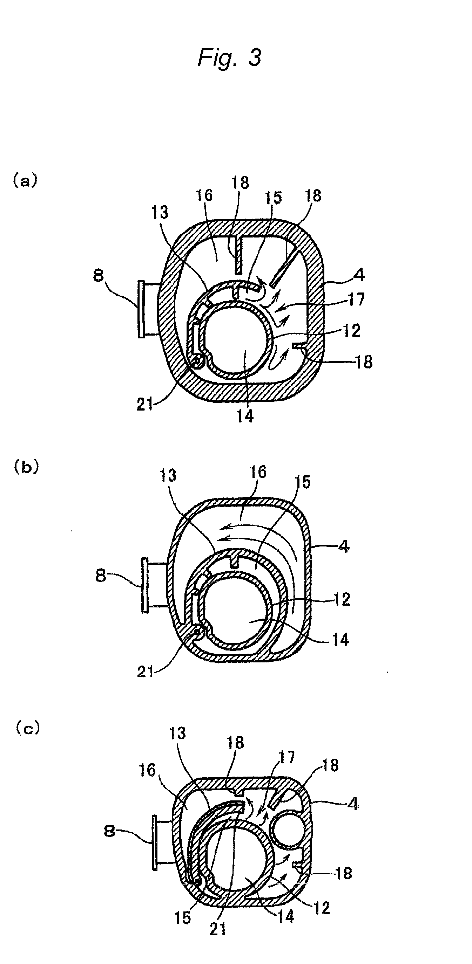

Fig. 1 is a front view illustrating an embodiment of a gas dissolver of the present invention. Fig. 2 is a vertical cross-sectional view of the gas dissolver illustrated in Fig. 1. Figs. 3(a), 3(b), and 3(c) are cross-sectional views of a dissolution tank in the gas dissolver illustrated in Fig. 2 taken along lines A-A, B-B, and C-C, respectively.

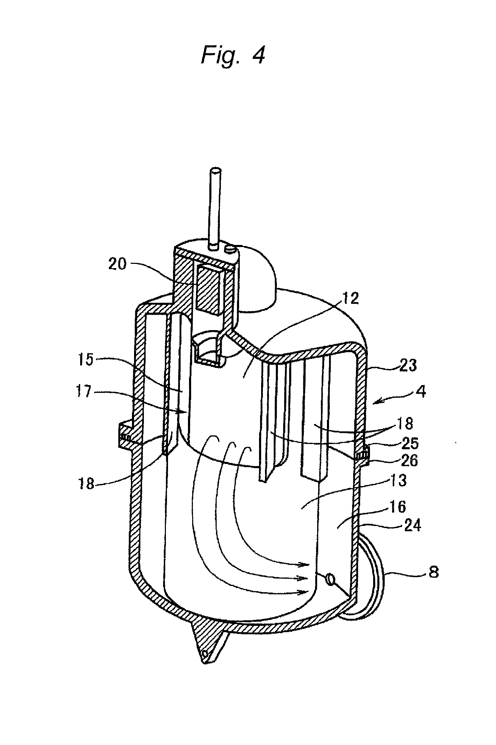

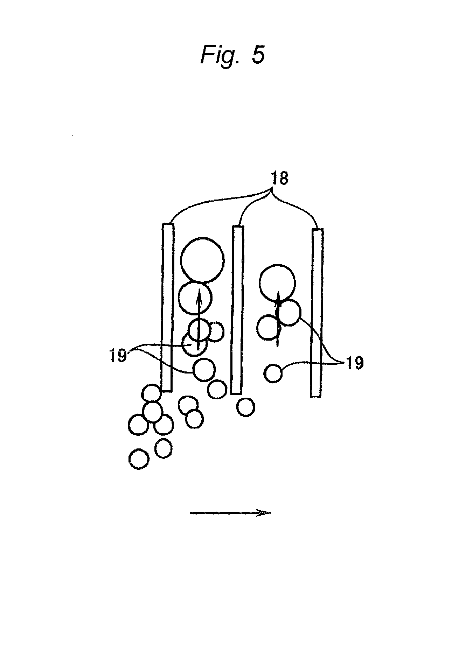

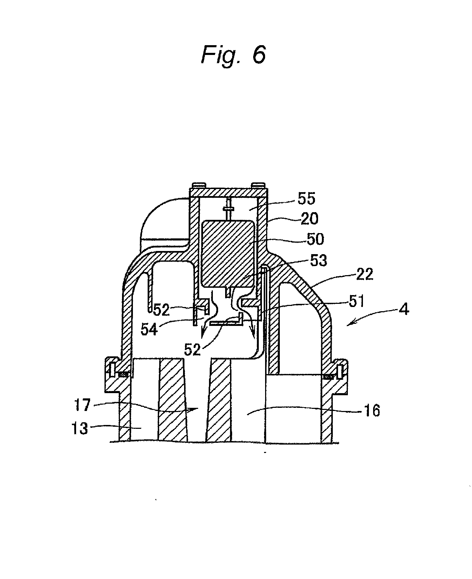

Fig. 4 is a perspective view of the dissolution tank partially broken away of the gas dissolver illustrated in Fig. 2. Fig. 5 is a schematic view illustrating suppression of moving bubbles by vertical ribs. Fig. 6 is a partial cross-sectional view illustrating the dissolution tank taken along line D-D of the gas dissolver illustrated in Fig. 2.

As illustrated in Figs. 1 and 2, a gas dissolver 1 includes a dissolution tank 4 which is provided with an outlet 8 capable of draining gas-dissolved liquid, and a first partitioning wall 12 and a second partitioning wall 13 which are provided in an interior of the dissolution tank 4. The interior of the dissolution tank 4 is partitioned into a gas-liquid mixing vessel 14, an intermediate vessel 15, and a gas-liquid separation vessel 16 in turn from the upstream side to the downstream side with respect to a flow of the gas-dissolved liquid by the first partitioning wall 12 and the second partitioning wall 13. In the gas dissolver 1, the gas-dissolved liquid is produced by mixing fluid flowing into the dissolution tank 4 with a gas in the gas-liquid mixing vessel 14. The liquid sequentially flows into the intermediate vessel 15 and the gas-liquid separation vessel 16, and flows out from the outlet 8 of the dissolution tank 4 to an outside of the dissolution tank 4.

As illustrated in Fig. 6, the gas dissolver 1 includes a gas discharge valve 20 which has a gas inlet 51 at a bottom portion of the gas discharge valve 20 and is provided at a top portion of the gas-liquid separation vessel 16, and a vent port 53 formed at the gas inlet 51 and a drain port 54. The vent port 53 introduces a part of a gas collected in the top portion of the gas-liquid separation vessel 16 into an interior of the gas discharge valve 20, and the drain port 54 drains off liquid entering the interior of the gas discharge valve 20 to the gas-liquid separation vessel 16. A position at which the vent port 53 is disposed is higher than that at which the drain port 54 is disposed with respect to a height direction of the dissolution tank 4.

As illustrated in Figs. 3(b) and 4, in the gas dissolving apparatus 1, the second partitioning wall 13 and the outlet 8 are provided such that the gas-dissolved liquid flows in the gas-liquid separation vessel 16 in a horizontal direction.

In the gas dissolving apparatus 1 as above-mentioned, as specifically illustrated in Figs. 1 and 2, a pump 3 is fixed on a stand 2, and the dissolution tank 4 is vertically attached on the pump 3. The pump 3 feeds a solvent such as water under pressure to the dissolution tank 4, and a suction portion 5 for the solvent is provided with a front face of the pump 3. The suction portion 5 is capable of connecting with a suction pipe (not illustrated). Additionally, the pump 3 is provided at an upper end with an ejection port 6 which protrudes upwardly.

As illustrated in Fig. 1, the dissolution tank 4 is provided with an inlet 7 at a bottom portion, and the inlet 7 is connected to the ejection port 6 of the pump 3. Therefore, the solvent fed by the pump 3 flows from the bottom portion of the dissolution tank 4 into the inside of the dissolution tank 4. Additionally, the dissolution tank 4 is provided with the outlet 8 at a different position from the inlet 7 of the bottom portion. The outlet 8 is a portion through which the liquid produced in the dissolution tank 4 flows out of the dissolution tank 4, and is disposed at a front-face side of the dissolution tank 4. The outlet 8 is capable of connecting with an outflow pipe (not illustrated) to supply the liquid to a supply destination.

Additionally, in the gas dissolver 1, a gas suction pipe 9 extending in a height direction of the gas dissolver 1 is connected with the suction portion 5 of the pump 3. The tip end of the gas suction pipe 9 is connected with a gas suction portion 11 in which a gas suction port 10 is formed. By a negative pressure generated by an operation of the pump 3, the gas as a solute, for example, air, which is one of the dissolution targets in the dissolution tank 4 is sucked from the gas suction port 10 of the gas suction portion 11, and is fed into the suction portion 5 of the pump 3 through the gas suction pipe 9. The gas fed into the suction portion 5 is mixed as bubbles in a solvent such as water, and gas-liquid mixing fluid is produced. The gas-liquid mixing fluid is supplied as fluid into the dissolution tank 4 through the ejection portion 6 and the inlet 7.

As illustrated in Fig. 2, two partitioning walls, namely, the first partitioning wall 12 and the second partitioning wall 13 are provided in the interior of the dissolution tank 4, and the interior of the dissolution tank 4 is partitioned into the gas-liquid mixing vessel 14, the intermediate vessel 15, and the gas-liquid separation vessel 16 by the first partitioning wall 12 and the second partitioning wall 13. The gas-liquid mixing vessel 14 is positioned at the most upstream side with respect to a flow of the liquid produced in the dissolution tank 4. The intermediate vessel 15 is disposed adjacent to an outside of the gas-liquid mixing vessel 14. The gas-liquid separation vessel 16 is positioned at the most downstream side with respect to the liquid flow, and is disposed adjacent to an outside of the intermediate vessel 15.

As illustrated in Figs. 3(a), 3(b), and 3(c), both of the first partitioning wall 12 and the second partitioning wall 13 are formed in a substantially elliptical shape. The first partitioning wall 12 serves as a partition between the gas-liquid mixing vessel 14 and the intermediate vessel 15. Additionally, as illustrated in Fig. 2, the first partitioning wall 12 downwardly extends from an upper face of the dissolution tank 4. A lower end of the first partitioning wall 12 does not reach a bottom face of the dissolution tank 4, forming a gap between the bottom face of the dissolution tank 4 and the lower end of the first partitioning wall 12. The gap serves as a passage of the liquid to communicate with the gas-liquid mixing vessel 14 and the intermediate vessel 15.

The second partitioning wall 13 serves as a partition between the intermediate vessel 15 and the gas-liquid separation vessel 16, and upwardly extends from the bottom face of the dissolution tank 4. The second partitioning wall 13 is provided such that the intermediate vessel 15 surrounds the gas-liquid mixing vessel 14 from an outside of the gas-liquid mixing vessel 14. Additionally, as illustrated in Figs. 3(a), 3(c), and 4, a top portion of the second partitioning wall 13 is partially cut in a substantially elliptical shape in a cross-section, and a notch portion 17 is formed. The intermediate vessel 15 and the gas-liquid separation vessel 16 communicate with each other through the notch portion 17. The notch portion 17 is disposed opposite to the outlet 8, and the outlet 8 is positioned away from the notch portion 17. Additionally, the outlet 8 is provided at the bottom portion of the gas-liquid separation vessel 16, and communicates with the gas-liquid separation vessel 16.

As illustrated in Fig. 2, in the dissolution tank 4, when the gas-liquid mixing fluid is supplied to the dissolution tank 4 by the operation of the pump 3, the gas-liquid mixing fluid is upwardly ejected from the bottom portion of the dissolution tank 4 to the gas-liquid mixing tank 14 through the inlet 7 illustrated in Fig. 1. The gas-liquid mixing fluid collides with the upper face of the dissolution tank 4 and the first partitioning wall 12, rebounds therefrom, and is collected in the bottom portion of the gas-liquid mixing vessel 14. Additionally, the gas-liquid mixing fluid which collides with and rebounds from the upper face of the dissolution tank 4 and the first partitioning wall 12 collides with the gas-liquid mixing fluid which is upwardly ejected from the bottom portion of the dissolution tank 4, and further collides with a liquid surface of the gas-liquid mixing fluid retained in the gas-liquid mixing vessel 14 to agitate the gas-liquid mixing fluid. At this time, the gas mixed through the gas suction pipe 9 illustrated in Fig. 1 and the gas already retained in the gas-liquid mixing vessel 14 are violently mixed with the solvent such as water. The gas-liquid mixing fluid is agitated, the gas is dissolved in the solvent under pressure, and the gas-dissolved liquid is produced. This is because the gas mixed as bubbles in the gas-liquid mixing fluid is finely divided by shearing brought about by agitation, and because a surface area in contact with the solvent is increased, and further because a gas concentration near the liquid surface is decreased by homogenization according to the agitation, and because a dissolution rate of the gas in the solvent is increased.

The produced liquid flows out to the intermediate vessel 15 through the gap between the lower end of the first partitioning wall 12 and the bottom face of the dissolution tank 4. As illustrated in Figs. 3(a), 3(c), and 4, the liquid flowing out to the intermediate vessel 15 flows over the notch portion 17 of the second partitioning wall 13 into the gas-liquid separation vessel 16. The gas-liquid separation vessel 16 separates a gas which is undissolved in the liquid from the liquid as bubbles. Since the liquid flow is raised up to a substantial liquid surface which is a gas-liquid boundary, the bubbles upwardly move according to a buoyant force. On the other hand, the liquid flowing out into the gas-liquid separation vessel 16 flows in a direction not preventing the bubbles from ascending. As illustrated in Figs. 3(b) and 4, the liquid flows in the gas-liquid separation vessel 16 in a horizontal direction. The liquid flow in the horizontal direction is along the gas-liquid separation vessel 16, and the liquid flowing in the gas-liquid separation vessel 16 in the horizontal direction flows out from the out let 8 to the outside of the dissolution tank 4. Since the outlet 8 is provided at the bottom portion of the gas-liquid separation vessel 16, the flowing of the large bubbles near the liquid surface is suppressed.

As above-mentioned, in the dissolution tank 4, since the second partitioning wall 13 and the outlet 8 are provided so that the liquid in the gas-liquid separation vessel 16 flows along the outer surface of the intermediate vessel 15 in the horizontal direction, the dissolution tank 4 can be made much smaller. In particular, a size in the height direction of the dissolution tank 4 can be reduced. This is effective for shortening the size of the dissolution tank 4 in the height direction. Additionally, since the outlet 8 is provided away from the notch portion 17 of the intermediate vessel 15, a distance necessary for separating the gas from the liquid can be longer, and a time taken for ascending the bubbles can be longer. Besides, since the liquid flows in the gas-liquid separation vessel 16 in the horizontal direction, the undissolved gas can be separated from the liquid during the liquid flow, and the separation of the gas from the liquid can be efficiently performed. Accordingly, it is possible to suppress an outflow of the undissolved gas from the outlet 8 to the outside of the dissolution tank 4.

Additionally, in the dissolution tank 4, since the second partitioning wall 13 is provided such that the intermediate vessel 15 surrounds the gas-liquid mixing vessel 14 from the outside of the gas-mixing vessel 14, it is possible to suppress noises which may easily occur at a time the liquid is produced. Besides, since the first partitioning wall 12 and the second partitioning wall 13 have the elliptical shape, the liquid flow can be homogenized, and the elliptical shape can be more effective for miniaturization of the dissolution tank 4.

On the other hand, as illustrated in Figs. 3(a), 3(c), and 4, vertical ribs 18 which downwardly extend from the upper face of the gas-liquid separation vessel 16 are preferably provided with the gas-liquid separation vessel 16. The vertical ribs 18 are formed in a small piece shape, and three vertical ribs 18 are provided with an interval therebetween in a flowing direction of the liquid.

As illustrated in Fig. 5, though the bobbles 19 upwardly moves in the liquid in the gas-liquid separation vessel 16, the vertical ribs 18 control movement of the bubbles 19 in the horizontal direction as is the same direction of the liquid flow. The bubbles 19 can only ascend in a length direction of the vertical ribs 18, and the plurality of ascending bubbles 19 are gradually combined. The vertical ribs 18 also serve to promote union of the bubbles 19. Accordingly, the undissolved gas is efficiently separated from the liquid, and outflow of the large bubbles from the gas-liquid separation vessel 16 to the outlet 8 can be suppressed. The united bubbles 19 are broken when reaching the liquid surface, and the undissolved gas is collected in the top portion of the gas-liquid separation vessel 16.

As above-mentioned, in the gas dissolver 1, as illustrated in Figs. 2 and 4, the gas discharge valve 20 is provided at the top portion of the gas-liquid separation vessel 16 of the dissolution tank 4 in order to drain off the undissolved gas collected in the top portion of the gas-liquid separation vessel 16 from the dissolution tank 4.

As illustrated in Fig. 6, the gas discharge valve 20 includes a float 50 which is movable in such a vertical direction as rising or falling and follows the height of the liquid surface of the liquid in the gas-liquid separation vessel 16. When the float 50 moves up and down according to a change in the height of the liquid surface of the liquid, the gas discharge valve 20 discharges or holds the gas which is retained in the top portion of the gas-liquid separation vessel 16.

The gas discharge valve 20 includes the cylindrical gas inlet 51 at a bottom portion. A peripheral wall 52 is provided with an inside the gas inlet 51. The peripheral wall 52 is provided with the vent port 53 for introducing the gas to an inside and the drain port 54 for draining off the liquid entering the inside to the gas-liquid separation vessel 16. Both of the vent port 53 and the drain port 54 are formed to pass through the peripheral wall 52 inwardly and outwardly. The inside of the peripheral wall 52 is hollow, and communicates with a float chamber 55 provided at an interior of the float 50. The gas discharge valve 20 discharges a part of the undissolved gas introduced to the inside of the peripheral wall 52 of the gas inlet 51 to the outside of the gas dissolution tank 4 through the float chamber 55 via the vent port 53

In the gas discharge valve 20 as above-mentioned, the vent port 53 and the drain port 54 are disposed at different positions with respect to the height direction of the dissolution tank 4. In other words, in the peripheral wall 52, the vent port 53 is disposed at a position higher than the drain port 54 is. Accordingly, in the gas inlet 51 of the gas discharge valve 20, since there is a difference in a height between the vent port 53 and the drain port 54, it is possible to apply a water head pressure to the liquid entering the inside of the peripheral wall 52. The liquid entering the inside of the peripheral wall 52 is positioned on a lower side of the vent port 53 in the gas inlet 51, and flows out to the gas-liquid separation vessel 16 from the drain port 54 in which the water head pressure is high. At the same time, a part of the gas collected in the top portion of the gas-liquid separation vessel 16 interchanges the liquid flowing out from the drain port 54, and is introduced in the inside of the peripheral wall 52 through the vent port 53 in the gas inlet 51 of the gas discharge valve 20. The gas introduced the inside of the peripheral wall 52 enters the float chamber 55, and is exhausted to the outside of the dissolution tank 4. The interchange of the liquid with the undissolved gas in the gas inlet 51 of the gas discharge valve 20 can be smoothly carried out, and a part of the undissolved gas retained in the top portion of the gas-liquid separation vessel 16 can be smoothly exhausted to the outside of the dissolution tank 4 by the gas discharge valve 20.

On the other hand, as illustrated in Figs. 2, 3(a), 3(b), and 3(c), it is preferable for the gas dissolution tank 4 to be provided with a gas circulation pipe 21 in order to reuse the gas collected in the top portion of the gas-liquid separation vessel 16.

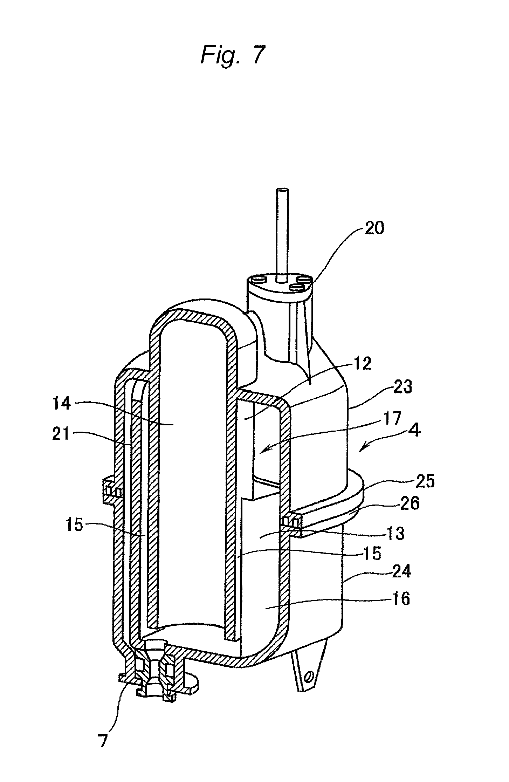

Fig. 7 is a perspective view illustrating a peripheral portion of a gas circulation pipe partially broken away of the dissolution tank

As illustrated in Fig. 7, the gas circulation pipe 21 is provided in an interior of the intermediate vessel 15 in a vertical direction, and a lower end is connected with the inlet 7 of the dissolution tank 4. As illustrated in Fig. 3(c), an upper end of the gas circulation pipe 21 is bent in a substantially elliptical shape along the second partitioning wall 13, and is horizontally disposed. The gas circulation pipe 21 is made of an elastic body such as rubber. As illustrated in Fig. 2, the upper end of the gas circulation pipe 21 is disposed between the upper face of the dissolution tank 4 and the top portion of the second partitioning wall 13, and also serves as a packing.

At the time of producing the gas-dissolved liquid, there occurs a difference in pressure between a vicinity of the upper end and a vicinity of the lower end of the gas circulation pipe 21. The pressure in the vicinity of the upper end of the gas circulation pipe 21 is higher than that in the vicinity of the lower end. Additionally, since the flow of the gas-liquid mixing fluid is fast in the inlet 7 illustrated in Fig. 7, the inlet 7 is reduced in pressure. Accordingly, the undissolved gas collected in the top portion of the gas-liquid separation vessel 16 is absorbed from the upper end of the gas circulation pipe 21, and supplied from the lower end to the inlet 7. The gas fed to the inlet 7 is mixed with the gas-liquid mixing fluid again, and is dissolved in the solvent in the gas-liquid mixing vessel 14. In this way, since the dissolution tank 4 is provided with the gas circulation pipe 21 which supplies the gas collected in the top portion of the gas-liquid separation vessel 16 to the gas-liquid mixing fluid flowing into the dissolution tank 4, the undissolved gas is reusable, and the gas can be dissolved with a higher efficiency.

Additionally, the gas circulation pipe 21 is arranged not only in the interior of the intermediate vessel but also in an interior of the gas-liquid separation vessel 16. Provided in the interior of the gas-liquid separation vessel 16, the gas circulation pipe 21 can function as provided in the interior of the intermediate vessel 14.

Besides, as illustrated in Fig. 1, a slope portion 22 with a falling gradient is preferably formed at the top portion of the dissolution tank 4. The gas collected in the top portion of the gas-liquid separation vessel 16 is gathered toward a center portion of the dissolution tank 4 by the slope portion 22 and therefore absorption of the gas from the upper end of the gas circulation pipe 21 is smoothly carried out. The gas can be efficiently supplied to the inlet 7.

As illustrated in Figs. 1 and 2, the dissolution tank 4 as described above is divided into two portions in the center portion in the vertical direction, and thus two parts of an upper part 23 on the upper side and a lower part 24 on the lower side can be formed.

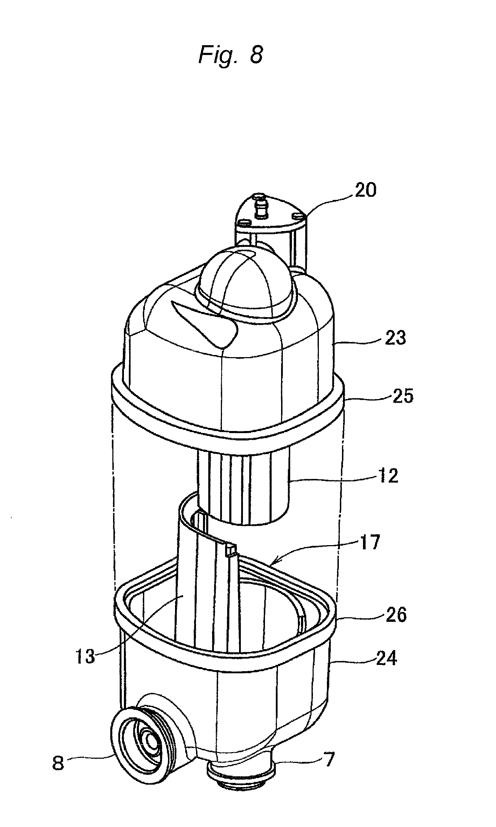

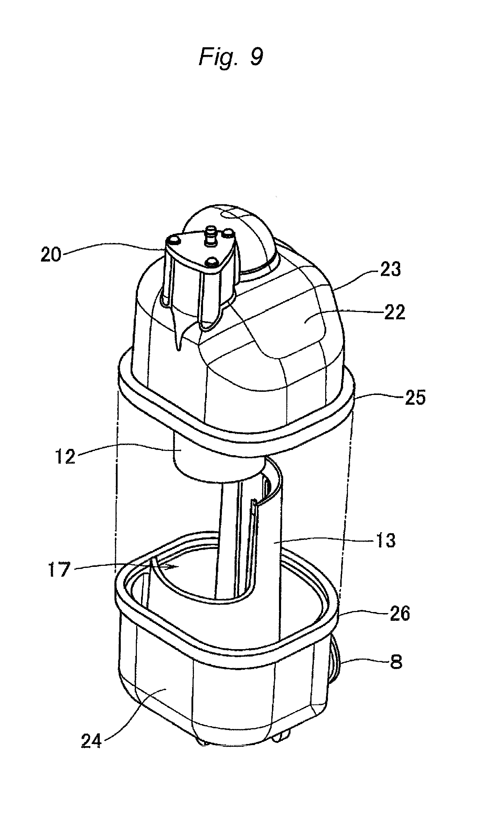

Figs. 8 and 9 are exploded perspective view of the dissolution tank of the gas dissolver illustrated in Fig. 1 and an exploded perspective view of the dissolution tank of the gas dissolver illustrated in Fig. 1, respectively. The dissolution tank viewed in different directions is illustrated in Figs. 8 and 9.

As illustrated in Figs. 8 and 9, in an upper part 23, the first partitioning wall 12 is integrally formed with the upper part 23, and the first partitioning wall 12 downwardly extends from an upper face of the upper part 23. In a lower part 24, the second partitioning wall 13 is integrally formed with the lower part 24, and the second partitioning wall 13 upwardly extends from a bottom face of the lower part 24. The inlet 8 and the outlet 8 are integrally formed with the lower part 24 in the bottom portion. In edge portions both of a lower end of the upper part 23 and of an upper end of the lower part 24, flange 25 and 26 extending outwardly are provided. The dissolution tank 4 is integrally assembled by superimposing the flanges 25 and 26, and by engaging the upper part 23 and the lower part 24 using appropriate fixing tools such as bolts and nuts at predetermined positions in the superimposed flanges 25 and 26. At a time of the assembling, the first partitioning wall 12 is inserted into an inside of the second partitioning wall 13, and thus the gas-liquid mixing vessel 14, the intermediate vessel 15, and the gas-liquid separation vessel 16 are formed. Additionally, as illustrated in Fig. 2, the upper end of the gas circulation pipe 21 formed of an elastic body illustrated in Fig. 3(c) is interposed between the upper face of the upper part 23 and the top portion of the second partitioning wall 13. The gas circulation pipe 21 serves as a packing according to such insertion of the gas circulation pipe 21, and the upper face of the upper part 23 closely comes in contact with the top portion of the second partitioning wall 13 with wartertight. Therefore, it is possible to suppress the outflow of the liquid from the intermediate vessel 15 to the gas-liquid separation vessel 16 at portions other than the notch portion 17 of the second partitioning wall 13. Since the watertightness between the upper face of the upper part 23 and the top portion of the second partitioning wall 13 is realized by the gas circulation pipe 21 which supplies the gas collected in the top portion of the gas-liquid separation vessel 16 to the dissolution tank 4, the number of components or parts of the dissolution tank 4 is reduced.

The present invention is not limited to the embodiment above-mentioned. The details of the structures of the pump, the stand and the gas discharge valve may be varied.

### Reference Signs List

- 1:: Gas dissolver
- 4:: Dissolution tank
- 8:: Outlet
- 12:: First partitioning wall
- 13:: Second partitioning wall
- 14:: Gas-liquid mixing vessel
- 15:: Intermediate vessel
- 16:: Gas-liquid separation vessel
- 17:: Notch portion
- 20:: Gas discharge valve
- 51:: Gas inlet
- 53:: Vent port
- 54:: Drain port

### Industrial Applicability

The gas dissolver of the present invention is a gas dissolver which dissolves a gas such as air in a solvent such as water. The gas dissolver of the present invention can smoothly exhaust a part of undissolved gas retained in a top portion of a dissolution tank to an outside of the dissolution tank by a gas discharge valve.

## Claims

1. A gas dissolver comprising
a dissolution tank provided with an outlet through which gas-dissolved liquid is capable of flowing, and
a first partitioning wall and a second partitioning wall provided in an interior of the dissolution tank, wherein the interior of the dissolution tank is partitioned into a gas-liquid mixing vessel, an intermediate vessel, and a gas-liquid separation vessel in turn from an upstream side to a downstream side with respect to a flow of the gas-dissolved liquid by the first partitioning wall and the second partitioning wall,
wherein the gas-dissolved fluid is produced by mixing fluid flowing into the dissolution tank with a gas in the gas-liquid mixing vessel, and
wherein the gas-dissolved liquid sequentially flows into the intermediate vessel and the gas-liquid separation vessel, and the gas-dissolved fluid flows out from the outlet of the dissolution tank to an outside of the dissolution tank,
**characterized in that** the gas dissolver further comprises
a gas discharge valve which has a gas inlet at a bottom portion of the gas discharge valve and is provided at a top portion of the gas-liquid separation vessel,
a vent port which is formed at the gas inlet and introduces a part of a gas collected in a top portion of the gas-liquid separation vessel into an interior of the gas discharge valve, and
a drain port which is formed at the gas inlet and drains off the gas-dissolved liquid entering an interior of the gas discharge valve to the gas-liquid separation vessel,
wherein a position at which the vent port is disposed is higher than that at which the drain port is disposed with respect to a height direction of the dissolution tank, and
wherein the second partitioning wall and the outlet are provided such that the gas-dissolved liquid flows along the gas-liquid separation vessel in a horizontal direction.

2. The gas dissolver according to claim 1, wherein
the second partitioning wall and the outlet are provided such that the gas-dissolved liquid flows along an outer surface of the intermediate vessel in a horizontal direction.

3. The gas dissolver according to claim 1 or 2, wherein
a top portion of the second partitioning wall is partially cut to form a notch portion, and the outlet is provided at a bottom portion of the gas-liquid separation vessel and is disposed at a position away from the notch portion.

4. The gas dissolver according to any one of claims 1 to 3, wherein
the second partitioning wall is provided such that the intermediate vessel surrounds a periphery of gas-liquid mixing vessel from an outside of the gas-liquid vessel partitioned by the first partitioning wall.

5. The gas dissolver according to claim 4, wherein
the first partitioning wall and the second partitioning wall have an elliptical shape.
